# EUROPEAN PATENT SPECIFICATION

(11) **EP 0 656 843 B1**
(45) Date of publication and mention of the grant of the patent: **19.03.1997**
(21) Application number: 93919785.1
(22) Date of filing: 03.09.1993
(51) Int. Cl.: B60R 25/00

(54) **A DEVICE FOR PREVENTING CAR THEFTS**
ANTI-DIEBSTAHLVORRICHTUNG FÜR FAHRZEUGE
ANTIVOL POUR AUTOMOBILES

(30) Priority: 04.09.1992 SE 9202545
(43) Date of publication of application: 14.06.1995
(73) Proprietor: T. LENNSTRÖM INVEST AB, 781 24 Borlänge (SE)
(72) Inventor: LENNSTRÖM, Thorsten, S-781 51 Borlänge (SE)
(74) Representative: Karlsson, Leif Karl Gunnar
(86) International application number: SE9300720
(87) International publication number: WO9405529

(56) References cited:
- EP-A- 0 242 012
- GB-A- 1 380 042
- US-A- 4 632 209
- US-A- 4 912 952

## Description

### Technical field

The present invention relates to a device for preventing car theft.

### Prior art

A variety of devices for preventing car theft have been developed and also used. Door locks, electronic alarms and steering wheel and gear shift locks are examples of such devices. Some of these devices are expensive to buy and install while others are unreliable and/or easy to force.

The prior art document EP-A 0 242 012 discloses a vehicle anti-theft device to prevent unauthorized use of the vehicle by preventing access to the vehicle operating pedals. The device includes a pivoted covering plate which pivots between an inoperative and operative position about a hinge. The plate is held in the operative position by a stay which is locked in position by a lock at its rear end and connected to the plate by a hinge at its front end. The stay extends backwards in the driver's area in both inoperative and operative position which is a problem to the driver.

The prior art document US-A-4,632,209 discloses a vehicle anti-theft device of the same type as in EP-A-0 242 012, but with its stay supporting the plate at only one of its vertical edges and locked in a vertical position to the gear shift console.

The prior art document GB-A-1 380 042 discloses a vehicle anti-theft device with its plate also only supported at but one of its vertical edges.

### Summary of the invention

It is an object of the present invention to provide a non-expensive and easy-to-mount device of the above described kind, which is comparatively difficult to force and which is located in the car in such a way as to be immediately visible from the outside so as to deter a presumptive car thief.

A further object of the present invention is to overcome the disadvantages known through prior art.

These objects are achieved by the device according to the invention presenting the features stated in the characterizing portions of the claims.

### Description of the drawings

Figure 1 is a view of a device according to the invention installed in a car, and
Figure 2 is a view of the device in Figure 1 seen obliquely from the other direction.

### Preferred embodiment

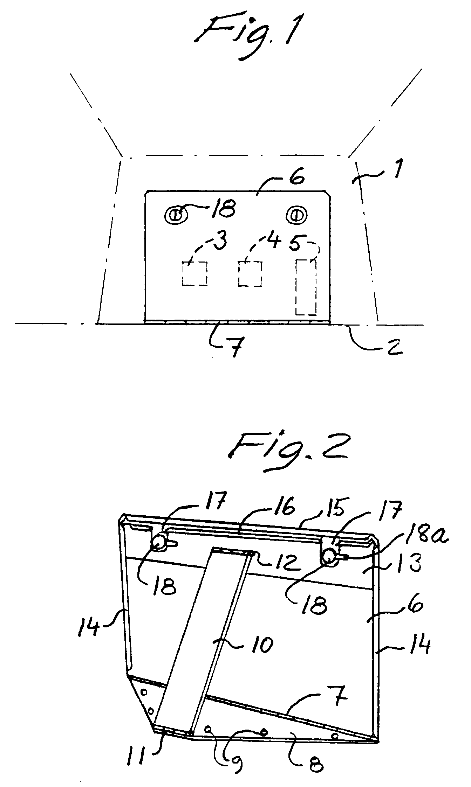

Figure 1 is a diagrammatic view showing in dashed lines from the rear the lower front section 1 of the driver's space in a car, which at the bottom is delimited by the car floor 2. The foot pedals 3, 4 and 5 of the car are disposed at the very front of section 1.

The device according to the invention prevents access to the pedals 3 - 5, or at least makes access to these more difficult, and as its most important part includes a screen 6, the shape and size of which are selected such that in a generally vertical position relatively close to the pedals it will be close to the floor 2 at a relatively short distance from the walls and top of section 1. Further, the shape and size are selected such that the screen will fit several different car models.

The screen 6, shown in Figures 1 and 2 as being rectangular, at its lower end is provided with a hinge 7 extending along the entire length of the screen. The hinge is connected to an attachment means in the form of a triangular plate 8 which is provided with a number of holes 9 used for fastening the plate to the car floor 2 by means of bolts. An arm 10 is connected to the plate 8 by means of a hinge 11 at the bevelled corner of the plate which is farthest away from the screen 6. The other end of the arm 10 is connected by means of a hinge 12 to an element in the form of a sliding plate 13 continuously abutting against the screen 6, which sliding plate is slightly shorter than the screen.

The details of the device according to the invention described so far are made of sheet steel or of some other strong material withstanding damage by bending, sawing and cutting. In order to increase the strength, the screen 6 is provided with inwardly directed flanges 14 and 15, and the plate 13 is provided with an inwardly directed flange 16. The flanges 14 also serve to guide the plate 13, both ends of which are inserted between these and the screen 6 and are slidable upwards/downwards along the screen. The flanges 15 and 16 also serve to prevent the plate 13 from sliding along the screen 6 farther upwards than what is shown in Figure 2 and therefore act as stop means.

In the upper portion of the plate 13 there are two upwardly open recesses 17. When the plate 13 is in its upper position shown on the drawings there are, opposite the recesses 17, holes in the screen 6, in which holes locks 18 are mounted. Each lock 18 consists of a portion fixed to the screen and of a portion 18a (not shown) turnable by means of a key, which portion is at a short distance from the plate 13 and can be brought to a locking position, as shown in Figure 2, where the portion 18a is located below the flange 16, and an open position in which the portion points vertically upwards or downwards.

The device according to the invention is secured to the car floor such that the plate 8 is closer to the pedals 3 - 5 than the screen 6. When not in use, the device forms a flat assembly with the screen 6 and the plate 8 protruding from each other so that they are in the same plane abutting against the floor, the plate 13 and the arm 10 lying on the screen and the plate 8. For the device not to be seen, an ordinary car mat is suitably placed on top of the device.

When the device is to be used, the screen 6 is pivoted upwards about the hinge 7 until it is in a generally vertical position, preferably with the upper part of the screen inclining somewhat inwardly towards the pedals. During pivoting, the plate 13 is displaced from a position at the lower portion of the screen 6 to the position shown in Figure 2, being guided by the flanges 14 until the flange 16 abuts against the flange 15. The plate 8 is suitably mounted in such a way relative to the pedals that the arm 10 in its pivoted position is located between two of these.

When the device has been brought to the position shown on the drawings, a key is inserted in each lock 18 and is turned such that the portion 18a will be brought to the position shown in Figure 2, whereby the plate 13 will be prevented from displacement downwards relative to the screen 6 because of the portion 18a preventing the flange 16 from passing the same. The keys are then removed.

During pivoting of the screen 6 into the position shown on the drawings, it is not necessary to remove the mat covering the device according to the invention when not in use, since the mat will then be automatically folded upwards towards the pedals.

While only one embodiment of the present invention has been described and shown it will be appreciated that the invention is not limited thereto. The device may thus be modified, for example by replacing the two locks 18 with a single lock suitably disposed opposite the arm 10. This lock will then be able to interact directly with the arm 10 so that the plate 13 may be excluded.

Thus, the invention is only limited by what is stated in the claims.

## Claims

1. A device for preventing car theft, comprising a screen (6) disposed between the front seat and foot pedals (3 - 5) of the car, which screen is lockable in a generally vertical position adjacent to the pedals in order to prevent access to these, and which is pivotally mounted to an attachment means (8) fixed to the car floor (2) for pivoting between the generally vertical position and a position abutting against the floor, and an arm (10) which is provided with an element (13) which interacts with the screen, **characterized** in that said arm (10) extends between the said attachment means (8) and the screen (6), which arm is located between the latter and the pedals (3 - 5) and is lockable to the screen by means of at least one lock (18).

2. A device according to claim 1, **characterized** in that one end of the arm (10) is pivotally mounted to the attachment means (8) and the other end of the arm is pivotally mounted to said element (13), which slidably interacts with the screen (6).

3. A device according to claim 1 or 2, **characterized** in that the lock (18) is mounted to the screen (6) and is provided with a lock means (18a) acted on by means of a key, which lock means (18a) prevents displacement of said element (13) relatively to the screen and therefore pivoting of the screen from the generally vertical position.

4. A device according to any of the preceding claims, **characterized** in that said element consists of a plate (13) extending essentially along the entire horizontal length of the screen (6) and the displacement of which relatively to the screen is controlled by guide means (14) disposed at the ends of the element and/or the screen, and that the plate is prevented from being displaced from the position in which it abuts against the floor (2) beyond its generally vertical position by stop means (15, 16) mounted to the plate and/or the screen.

5. A device according to any of the preceding claims, **characterized** in that the attachment means (8) is located between the pedals (3 - 5) and the screen (6).

## Patentansprüche

1. Anti-Diebstahlvorrichtung für Fahrzeuge, die ein zwischen dem Vordersitz und den Fußpedalen (3 - 5) des Fahrzeuges angeordnetes Gitter (6) umfaßt, das in einer im wesentlichen vertikalen Lage im Bereich der Pedale verriegelbar ist, um den Zugang zu diesen zu verhindern, und das schwenkbar mit einem am Fahrzeugboden (2) fixierten Befestigungsorgan (8) verbunden ist, um das Gitter zwischen der im wesentlichen vertikalen Lage und einer am Boden anliegenden Lage zu verschwenken, wobei weiters ein Arm (10) vorgesehen ist, der mit einem mit dem Gitter zusammenwirkenden Element (13) versehen ist, dadurch gekennzeichnet, daß sich der Arm (10) zwischen dem Befestigungsorgan (8) und dem Gitter (6) erstreckt und sich zwischen diesem und den Pedalen (3-5) befindet sowie mittels wenigstens eines Schlosses (18) mit dem Gitter versperrbar ist.

2. Vorrichtung nach Patentanspruch 1, dadurch gekennzeichnet, daß ein Ende des Armes (10) schwenkbar mit dem Befestigungsorgan (8) verbunden ist und das andere Ende des Armes am genannten Element (13) angelenkt ist, das mit dem Gitter (6) verschiebbar zusammenwirkt.

3. Vorrichtung nach Patentanspruch 1 oder 2, dadurch gekennzeichnet, daß das Schloß (18) am Gitter (6) befestigt ist und mit einem mittels eines Schlüssels betätigbaren Sperrorgan (18a) versehen ist, das die Verschiebung des Elementes (13) in bezug auf das Gitter und damit das Verschwenken des Gitters aus der im wesentlichen vertikalen Lage verhindert.

4. Vorrichtung nach einem der vorhergehenden Patentansprüche, dadurch gekennzeichnet, daß das genannte Element aus einer Platte (13) besteht, die sich im wesentlichen entlang der gesamten horizontalen Länge des Gitters (6) erstreckt und deren Verschiebung in bezug zum Gitter durch Führungsorgane (14) gesichert ist, die an den Enden des Elementes und/oder des Gitters angebracht sind, wobei die Verschiebung der Platte aus ihrer am Boden (2) anliegenden Lage über ihre im wesentlichen vertikale Lage hinaus mittels Stoporganen (15, 16) verhindert ist, die auf der Platte und/oder dem Gitter befestigt sind.

5. Vorrichtung nach einem der vorhergehenden Patentansprüche, dadurch gekennzeichnet, daß das Befestigungsorgan (8) zwischen den Pedalen (3 -5) und dem Gitter (6) angeordnet ist.

## Revendications

1. Antivol de voiture, comprenant un écran (6) disposé entre le siège avant et les pédales (3-5) de la voiture, cet écran pouvant être verrouillé dans une position globalement verticale, de façon adjacente aux pédales, afin d'empêcher l'accès à celles-ci, et étant monté pivotant sur des moyens de fixation (8) fixés sur le plancher (2) de la voiture pour pivoter entre la position globalement verticale et une position en butée contre le plancher, et un bras (10) équipé d'un élément (13) qui coopère avec l'écran, caractérisé en ce que le bras (10) s'étend entre les moyens de fixation (8) et l'écran (6), est situé entre ce dernier et les pédales (3-5), et peut être verrouillé sur l'écran au moyen d'au moins un verrou (18).

2. Antivol selon la revendication 1, caractérisé en ce qu'une extrémité du bras (10) est montée pivotante sur les moyens de fixation (8) et l'autre extrémité du bras est montée pivotante sur l'élément (13), qui coopère en coulissement avec l'écran (6).

3. Antivol selon la revendication 1 ou 2, caractérisé en ce que le verrou (18) est monté sur l'écran (6) et est équipé de moyens de verrouillage (18a) sur lesquels on agit au moyen d'une clé, ces moyens de verrouillage (18a) empêchant le déplacement de l'élément (13) par rapport à l'écran et, donc, le pivotement de l'écran hors de la position globalement verticale.

4. Antivol selon l'une quelconque des revendications précédentes, caractérisé en ce que l'élément est constitué d'une plaque (13) s'étendant sensiblement sur toute la longueur horizontale de l'écran (6), dont le déplacement par rapport à l'écran est commandé par des moyens de guidage (14) disposés aux extrémités de l'élément et/ou de l'écran, et en ce que la plaque est empêchée d'être déplacée de la position dans laquelle elle bute contre le plancher (2), au-delà de sa position globalement verticale, par des moyens d'arrêt (15, 16) montés sur la plaque et/ou l'écran.

5. Antivol selon l'une quelconque des revendications précédentes, caractérisé en ce que les moyens de fixation (8) sont situés entre les pédales (3-5) et l'écran (6).
